# EUROPÄISCHE PATENTSCHRIFT

(11) **EP 2 344 736 B1**
(45) Veröffentlichungstag und Bekanntmachung des Hinweises auf die Patenterteilung: **23.04.2014**
(21) Anmeldenummer: 09778319.5
(22) Anmeldetag: 03.09.2009
(51) Int. Cl.: F01N 3/20, B01D 53/94, C10L 1/22

(54) **VERFAHREN ZUR VERMINDERUNG VON STICKOXIDEN IM ABGASSTROM VON BRENNKRAFTMASCHINEN**
METHOD FOR REDUCING NITRIC OXIDE IN THE EXHAUST GAS FLOW OF INTERNAL COMBUSTION ENGINES
PROCÉDÉ PERMETTANT DE RÉDUIRE LA TENEUR EN OXYDES D'AZOTE DANS UN COURANT DE GAZ D'ÉCHAPPEMENT DE MOTEURS À COMBUSTION INTERNE

(30) Priorität: 09.09.2008 DE 102008046381
(43) Veröffentlichungstag der Anmeldung: 20.07.2011
(73) Patentinhaber: MAN Truck & Bus AG, 80995 München (DE)
(72) Erfinder: DÖRING, Andreas, 82008 Munchen (DE); ROTHE, Dieter, 90403 Nürnberg (DE)
(74) Vertreter: Meissner, Bolte & Partner GbR
(86) Internationale Anmeldenummer: PCT/EP2009/006402
(87) Internationale Veröffentlichungsnummer: WO 2010/028775

(56) Entgegenhaltungen:
- DE-A1- 4 423 003
- DE-A1- 10 226 975
- DE-A1-102004 029 521
- US-A- 6 051 040
- US-B1- 6 202 407

## Beschreibung

Die Erfindung betrifft ein Verfahren zur Verminderung von Stickoxiden im Abgasstrom von Brennkraftmaschinen, insbesondere eines Kraftfahrzeug-Verbrennungsmotors, wobei ein Luft/Kraft:stoffgemisch im Brennraum der Brennkraftmaschine in Gegenwart eines Kraftstoffadditivs verbrannt wird und dabei das Kraftstoffadditiv zerfällt und der Abgasstrom durch mindestens einen stromabwärts vom Brennraum angeordneten Katalysator geleitet wird.

Aufgrund immer strengerer Abgasgrenzwerte, die nicht mehr allein durch motorische Maßnahmen zu erreichen sind, werden die meisten Brennkraftmaschinen inzwischen mit Nachbehandlungssystemen zur Verminderung der Schadstoffemissionen ausgerüstet. Neben Feststoffpartikeln gehören Stickoxide zu den limitierten Abgaskomponenten, die während der Verbrennungsvorgänge entstehen und deren erlaubte Emissionen fortlaufend abgesenkt werden. Zur Minimierung dieser Abgaskomponenten bei in Kraftfahrzeugen betriebenen Brennkraftmaschinen werden heute unterschiedliche Verfahren herangezogen. Die Verminderung der Stickoxide geschieht in der Regel mit Hilfe von Katalysatoren, wobei in sauerstoffreichem Abgas zusätzlich ein Reduktionsmittel erforderlich ist, um die Selektivität und die NOx-Umsätze anzuheben. Bekannt geworden sind diese Verfahren unter dem Sammelbegriff "SCR-Verfahren", wobei "SCR" für "selektive katalytische Reduktion" steht. Deren Einsatz erfolgt seit vielen Jahren im Kraftwerksbereich und in jüngster Zeit auch in Brennkraftmaschinen. Eine ausführliche Darstellung derartiger Verfahren ist der DE 34 28 232 A1 zu entnehmen. Als SCR-Katalysatoren können V₂O₅-haltige Mischoxide, beispielsweise in Form des Mischoxids V₂O₅/WO_{3/}TiO₂, verwendet werden. Die typischen V₂O₅-Anteile liegen zwischen 0,2 und 3 Gew.-%. Als Reduktionsmittel kommen Ammoniak oder Ammoniak abspaltende Verbindungen, wie Harnstoff oder Ammoniumformiat, fest oder gelöst, zum Einsatz. Dabei können sich die Stickoxide mit Ammoniak in Gegenwart von Sauerstoff nach der Gleichung (1) zu Stickstoff umsetzen:

4 NO + 4 NH₃ + O₂ → 4 N₂ + 6 H₂O (1)

Von der Zersetzung von Harnstoff ((NH₂)₂CO) in Ammoniak (NH₃) ist es bekannt, dass dies unter optimalen Bedingungen (Temperaturen über 350°C) in zwei Stufen geschieht. Nach der Gleichung (2)

(NH₂)₂CO → NH₃ + HNCO (2)

erfolgt zunächst die Thermolyse, d.h. die thermische Zersetzung von Harnstoff in Ammoniak und Isocyansäure. Anschließend erfolgt nach der Gleichung (3)

HNCO + H₂O → NH₃ + CO₂ (3)

die Hydrolyse, also die katalytische Zersetzung von Isocyansäure (HNCO) in Ammoniak (NH3) und Kohlendioxid (CO₂). Vor allem bei der Verwendung des SCR-Verfahrens in Fahrzeugen, wird, auf Grund der leichteren Handhabbarkeit, meist eine wässrige Harnstoff-Wasser-Lösung eingesetzt. Da das Reduktionsmittel in einer in Wasser gelösten Form vorliegt, muss das Wasser vor oder während der eigentlichen Thermo- und Hydrolyse verdampfen, bevor die oben beschriebenen Reaktionen ablaufen können. Liegen die Temperaturen bei den Reaktionen nach den Gleichungen (2) und (3) unter 350°C bzw. wird nur langsam erhitzt, so entsteht nach der DE 40 38 054 A1 hauptsächlich feste und schmelzbare Cyanursäure durch Trimerisierung der nach (2) gebildeten Isocyansäure gemäß Gleichung (4).

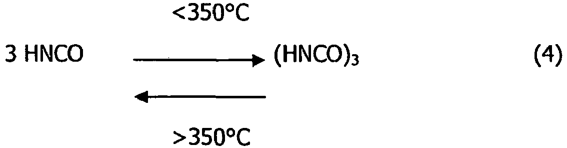

Die gebildete Cyanursäure führt leicht zum Verstopfen des nachfolgend angeordneten SCR-Katalysators. Daher wird in der DE 40 38 054 zur Abhilfe vorgeschlagen, dass der mit dem Reduktionsmittel beladene Abgasstrom über einen Hydrolysekatalysator geführt wird. Die Abgastemperatur, von der an eine quantitative Hydrolyse möglich wird, lässt sich so auf 160°C senken. Aufbau und Zusammensetzung eines entsprechenden Katalysators wird in der DE 40 38 054 ebenso beschrieben wie Aufbau und Funktion eines mit einem Hydrolysekatalysator ausgestatteten SCR-Katalysators. Es besteht stets die Notwendigkeit, beim Einsatz von Harnstoff oder einer wässrigen Harnstofflösung diese als zusätzlichen Betriebsstoff mit und über eine geeignete Zuführungs- und Fördereinrichtungen dem Abgas zuzuführen Zusätzlich muss im Abgastrakt ein Hydrolysekatalysator angeordnet werden. Beides führt zu einem Anstieg des für die Abgasnachbehandlung notwendigen Bauvolumens, was bei den beengten Platzverhältnissen in Kraftfahrzeugen oft mit Problemen verbunden ist. Ein weiteres Problem stellt der Gefrierpunkt einer 32,5 %-igen Harnstofflösung von -11,5°C dar, da Tank, Leitungen und das Dosiersystem bei tiefen Temperaturen beheizt werden müssen. Zusätzlich entstehen für das hierzu notwendige Dosiersystem erhebliche Kosten.

Bei in Kraftfahrzeugen betriebenen Brennkraftmaschinen gestaltet sich die Reduzierung des Stickoxids mit Hilfe des SCR-Verfahrens deshalb schwierig, weil dort wechselnde Betriebsbedingungen vorliegen, was die mengenmäßige Zumessung des Reduktionsmittels erschwert. Es soll zwar einerseits ein möglichst hoher Umsatz an Stickoxiden erreicht werden, andererseits ist darauf zu achten, dass es nicht zur Emission unverbrauchten Ammoniaks kommt. Um dieses Problem zu beheben, wird dem SCR-Katalysator häufig ein Ammoniak-Sperrkatalysator nachgeordnet, der überschüssigen Ammoniak zu Stickstoff und Wasserdampf umsetzt. Weiter kann der Einsatz von V₂O₅ als Aktivmaterial für den SCR-Katalysator dann Probleme aufwerfen, wenn die Abgastemperatur am SCR-Katalysator 650°C überschreitet, weil dann V₂O₅ sublimiert. Daher werden für Hochtemperaturanwendungen V₂O₅-freie Eisen- oder Kupferzeolithe eingesetzt.

Die oben beschriebenen Probleme des Standes der Technik werden durch das aus der DE 44 23 003 C2 bekannte Verfahren zum Reduzieren der Stickoxid-Konzentration im Abgasstrom eines Kraftfahrzeug-Verbrennungsmotors nicht behoben. Das Luft/Kraftstoffgemisch wird danach in Gegenwart eines selektiv reduzierenden Additivs im Brennraum einer Brennkraftmaschine verbrannt. Das selektiv reduzierende Additiv zerfällt dabei, um im Brennraum mit Stickoxiden zu reagieren und diese zu reduzieren. Dieses Verfahren ist aus dem Kraftwerksbereich unter dem Namen SNCR (selektive nicht katalytische Reduktion) bekannt und läuft nur bei Temperaturen über 700°C ab. Als Additiv werden in der DE 44 23 003 C2 Ammoniak, Hydrazin und Tricyansäure (Cyanursäure) bevorzugt, wo bei die beiden erstgenannten auf Grund ihrer Toxizität bzw. leichten Entzündbarkeit wohl nur hypothetisch eingesetzt werden dürften. Die Reaktion des reduzierenden Agens mit den zu reduzierenden Stickoxiden soll, wie bereits erwähnt, im Brennraum erfolgen. Die zu postulierenden Reaktionen sind jedoch zu träge und bei weitem nicht so selektiv, wie beim SCR-Verfahren, so dass sich eine Vielzahl von unerwünschten Nebenprodukten bildet. Dies wird auch in der DE 44 23 003 C2 dargelegt, wobei der Einsatz von Cyanursäure in diesem Zusammenhang besonders problematisch ist, da sie zur Bildung von N₂O führt (sh. Sp. 7, Z. 35-37). Als ebenso problemtatisch hat sich in diesem Zusammenhang Harnstoff erwiesen, der über das Zwischenprodukt HNCO ebenfalls zur Bildung von N₂O neigt. Die nicht katalytische Reaktion des reduzierenden Agens mit den zu reduzierenden Stickoxiden wird im Abgastrakt auf Grund der bei mit Luftüberschuss betriebenen Brennkraftmaschinen, geringen Abgastemperaturen von maximal 600°, nicht oder nur in nicht ausreichender Menge erfolgen. Ferner ist die Löslichkeit des reduzierenden Agens Cyanursäure mit 12 bzw. 18 Prozent in Dimethylsulfoxid (DMSO) bzw. Dimethylamid (DMA) zu gering für eine ausreichende Wirksamkeit. Zudem ist die Verwendung des Lösungsmittels DMSO unvorteilhaft, da es im Abgastrakt zu einer Bildung von unerwünschten Schwefelverbindungen führt.

Aus der US 6051040 A ist auch ein SCR-Verfahren zu entnehmen.

Der Erfindung lag daher die Aufgabe zugrunde, die eingangs bezeichneten Verfahren so weiterzubilden, dass die beschriebenen Nachteile bekannter Verfahren weitgehend ausgeschlossen sind. Dabei soll es insbesondere möglich sein, dass Abgasnachbehandlungssysteme zur NOₓ-Verminderung in sauerstoffreichem Abgas oder Teile eines Abgasnachbehandlungssystems im Abgastrakt so angeordnet werden können, dass eine Vergrößerung des Bauraums vermieden werden kann.

Vorstehende Aufgabe wird durch ein Verfahren der eingangs beschriebenen Art dadurch gelöst, dass ein Kraftstoffadditiv eingesetzt wird, das im Brennraum unter Freisetzung von Ammoniak zerfällt, und der Ammoniak enthaltende Abgasstrom zur Verminderung der Konzentration der darin enthaltenen Stickoxide durch mindestens einen stromabwärts vom Brennraum angeordneten SCR-Katalysator geleitet wird.

Vorteilhafte Ausgestaltungen dieses Verfahrens gehen aus den nachfolgend noch dargestellten Unteransprüchen 2 bis 14 hervor.

Der Grundgedanke der vorliegenden Erfindung besteht darin, Kraftstoff und/oder Kraftstoffadditive zu verwenden, durch die zum Ende der Verbrennung im Brennraum Ammoniak freigesetzt wird und dieser Ammoniak an nachgeschalteten SCR- Katalysatoren zur Reduktion von Stickoxiden dient. Auf diese Weise kann zum einen auf eine aufwändige Zugabe des Reduktionsmittels in den Abgastrakt verzichtet werden und zum anderen ist durch die Reduktion der Stickoxide an SCR-Katalysatoren eine hohe Selektivität zu Stickstoff sichergestellt, wodurch die Menge an gebildetem N₂O gering gehalten oder dessen Bildung ganz verhindert wird. Dies gelingt durch den Einsatz von stickstoffhaltigen organischen Verbindungen, die keinen Phosphor oder Schwefel enthalten und die bei ihrer Zersetzung Ammoniak freisetzen.

Beim Einsatz des ammoniakabspaltenden Kraftstoffs oder Kraftstoffadditivs ist darauf zu achten, dass der Ammoniak nicht während der Verbrennung oxidiert wird, um an den nachgeschalteten SCR-Katalysatoren ausreichende NOₓ-Umsätze erzielen zu können.

Daher sollten Verbindungen ausgewählt werden, die eine Oxidation des Ammoniaks verhindern. Dies gelingt zum einen durch die Verwendung großer organischer Moleküle, in denen der Stickstoff vor einer direkten Oxidation geschützt wird und/oder die Einkapselung von stickstoffhaltigen Verbindungen. Ziel ist hierbei die Freisetzung des Ammoniaks erst zum Ende der Verbrennung.

Bei der Auswahl der Verbindungen ist darauf zu achten, dass sich, anders als beim Einsatz von Cyanursäure oder Harnstoff, nur geringe Mengen Lachgas, vorteilhaft unter 30ppm, bilden. Gelingt dies nicht allein durch die Auswahl einer geeigneten Verbindung, so ist die zugeführte Menge dieser Verbindung zu verringern.

So bieten sich stickstoffhaltige, heterozyklische organische Verbindungen, bestehend aus einem oder mehreren Ringen, die keinen Schwefel oder Phosphor enthalten, an. Insbesondere Heterocycloalkane und/oder Heterocycloalkene und/oder Heteroaromaten mit einem oder mehreren Stickstoffatomen.

Hier handelt es sich um eine bevorzugte organische Stickstoffverbindung. Bei diesen Verbindungen sind Guanidin, Azirin, Aziridin, Diaziridin, Pyrrol, Pyrazol, Triazol, Imidazol, Pyridin, Pyrimidin, Pyrazin, Pyrazidin, Triazin, Purin, Azepin, Chinolin, Isochinolin, Indol, Benzimidazol, Phenazin, Porphin, Pteridin und/oder Isoindol besonders bevorzugt.

Mit besonderem Vorteil lassen sich auch Ammoniakvorläufer mit Amino- und/oder Ammoniumverbindungen heranziehen. Bei der Funktionalisierung der Verbindungen mit Aminogruppen bieten sich insbesondere Amino-aziridin, -diaziridin, -pyrrol, -imidazol, -pyridin, - pyrimidin, -pyrazin, -pyrazidin, -triazin, -purin, -azepin, -chinolin, -isochinolin, -indol, - benzimidazol und/oder -isoindol an. Hier wird vorzugsweise ein Ammoniumorganyl herangezogen.

Beim Einsatz von Ammoniumorganylen der allgemeinen Form (NR₄⁺X⁻) wobei R⁺ aus Wasserstoff und/oder wenigstens einem C₁ - C₃₀Alkyl besteht und X⁻ sich aus Formiat und/oder Acetat und/oder Alkylat und/oder Oxalat und/oder Carbonat zusammensetzt. Es kommen unter anderem Butyl-NH₄, Methyl-NH₄, Phenyl-NH₄, Ethyl-NH₄, t-Butyl-NH₄, PhenylCH₂-NH₄ und/oder NH₄-C₅H₅ in Frage. Diese Verbindungen können zusätzlich mit Aminogruppen funktionalisiert werden. Um das Ammoniak vor Oxidation zu schützen, ist der Einsatz von organisch komplexierten Ammoniumverbindungen sinnvoll, da hier das Ammonium in vorteilhafter Weise von dem organischen Komplex umgeben ist. In Frage kommen hierfür insbesondere Tetraammoniumethylendiamintetraacetat, Triammoniumnitriloacetat., Tetraammoniumcyclohexandiamin-(1,2)-acetat, Pentaammonium-diethylentriaminpentaacetat, Tetraammonium-Ethylenglykol-bis(aminoethylether)-N,N'-Tetraacetat, N-(2-Hydroxyethyl)-ethylendiamin-N,N,N'-triessigsäure-Triammoniumsalz und/oder Hexaammonium-Triethylentetraminhexaacetat.

Das Kraftstoffadditiv kann dem Kraftstofftank direkt zugegeben und/oder durch einen separaten Tank dem Kraftstoff außerhalb des Kraftstofftanks zugemischt werden. Bevorzugt ist es, dass eine Lösung des Kraftstoffadditivs in Dimethylacetamid, Dimethylformamid und/oder Dimethylpyridin verwendet wird.

Das Abgasnachbehandlungssystem ist vorzugsweise dadurch gekennzeichnet, dass die SCR-Katalysatoren zur Reduktion von Stickoxiden mit Hilfe von Ammoniak als Aktivkomponente Vanadium, Vanadiumpentoxid, Titandioxid, Wolframoxid, kupferhaltige Zeolithe, eisenhaltige Zeolithe und/oder kobalthaltige Zeolithe enthalten.

Da die Menge des gebildeten Ammoniaks fest mit der Menge des verbrannten Kraftstoffs oder Kraftstoffadditivs verknüpft ist, kann die Menge des gebildeten Ammoniaks die Menge des während der Verbrennung gebildeten NOₓ übersteigen. Dies würde erheblichen NH₃-Emissionen stromab des SCR-Katalysators führen. Daher ist es sinnvoll, stromab des SCR-Katalysators einen Katalysator zur Oxidation von NH₃ anzuordnen. Als Aktivkomponente kommen Platin und/oder Palladium und/oder Iridium und/oder deren Oxide und/oder Zeolithe in Frage.

Mit der Erfindung, insbesondere mit den geschilderten vorteilhaften Weiterbildungen, wird eine optimale Lösung der hier zugrunde liegenden Aufgabe erreicht. Es hat sich gezeigt, dass der Stickoxid-Gehalt im Abgasstrom der Brennkraftmaschinen durch das erfindungsgemäß herangezogene Kraftstoffadditiv höchst wirksam und in wünschenswertem Ausmaß reduziert werden kann, ohne dass ein Abgasnachbehandlungssystem aufwendig ausgebildet und der Bauraum vergrößert werden muss.

## Patentansprüche

1. Verfahren zur Verminderung von Stickoxiden im Abgasstrom von Brennkraftmaschinen, insbesondere eines Kraftfahrzeug-Verbrennungsmotors, wobei ein Luft/Kraftstoffgemisch im Brennraum der Brennkraftmaschine in Gegenwart eines Kraftstoffadditivs verbrannt wird und dabei das Kraftstoffadditiv zerfällt und der Abgasstrom durch mindestens einen stromabwärts vom Brennraum angeordneten Katalysator geleitet wird, **dadurch gekennzeichnet, dass** ein Kraftstoffadditiv eingesetzt wird, das im Brennraum unter Freisetzung von Ammoniak zerfällt, und der Ammoniak enthaltende Abgasstrom zur Verminderung der Konzentration der darin enthaltenen Stickoxide durch mindestens einen stromabwärts vom Brennraum angeordneten SCR-Katalysator geleitet wird.

2. Verfahren nach Anspruch 1, **dadurch gekennzeichnet, dass** als Kraftstoffadditiv mindestens eine organische stickstoffhaltige Verbindung herangezogen wird.

3. Verfahren nach Anspruch 2, **dadurch gekennzeichnet, dass** als organische stickstoffhaltige Verbindung a.) eine stickstoffhaltige, heterocyclische Verbindung, die einen oder mehrere Ringe und keinen Gehalt an Schwefel oder Phosphor aufweist, und/oder b.) ein Ammoniakvorläufer mit Amino- und/oder Ammoniumgruppen herangezogen wird.

4. Verfahren nach Anspruch 3, **dadurch gekennzeichnet, dass** als Verbindung a) Guanidin, Azirin, Aziridin, Diaziridin, Pyrrol, Imidazol, Pyrazol, Triazol, Pyridin, Pyrimidin, Pyrazin, Pyrazidin, Triazin, Purin, Azepin, Chinolin, Isochinolin, Indol, Benzimidazol, Phenazin, Porphin, Pteridin und/oder Isoindol verwendet wird.

5. Verfahren nach Anspruch 3, **dadurch gekennzeichnet, dass** als Verbindung b) ein Ammoniumorganyl der Form NR₄⁺X⁻ verwendet wird.

6. Verfahren nach Anspruch 5, **dadurch gekennzeichnet, dass** sich R⁺ aus Wasserstoff und/oder wenigstens einem C₁ - C₃₀Alkyl zusammensetzt.

7. Verfahren nach Anspruch 5 - 6, **dadurch gekennzeichnet, dass** sich X aus Formiat und/oder Acetat und/oder Alkylat und/oder Oxalat und/oder Carbonat zusammensetzt.

8. Verfahren nach Anspruch 5 - 7, **dadurch gekennzeichnet, dass** es sich bei den Ammoniumdrganylverbindungen um Butyl-NH₄, Methyl-NH₄, Phenyl-NH₄, Ethyl-NH₄, t-Butyl-NH₄, Phenyl-CH₂-NH₄, NH₄-C₅H₅ Butyl-NR₄, Methyl-NR₄, Phenyl-NR₄, Ethyl-NR₄, t-Butyl-NR₄, Phenyl-CH₂-NR₄ und/oder NR₄-c₅H₅ ( mit R = C₁ - C₃₀Alkyl-) handelt.

9. Verfahren nach mindestens einem der vorhergehenden Ansprüche, **dadurch gekennzeichnet, dass** das Kraftstoffadditiv organisch komplexierte Stickstoffverbindungen, insbesondere Amino- und/oder Ammoniumverbindungen, enthält, um den im Brennraum gebildeten Ammoniak vor Oxidation zu schützen.

10. Verfahren nach Anspruch 8, **dadurch gekennzeichnet, dass** als organisch komplexierte Ammoniumverbindungen Tetraammoniummethylendiamintetraacetat, Triammoniumnitriloacetat, Tetraammoniumcyclohexandiamin-(1,2)-acetat, Pentaammoniumdiethylentriaminpentaacetat, Tetraammoniumethylenglykol-bis(aminoethylether)-N,N'-tetraacetat, N-(2-hydro-xyethyl)-ethy-lendiamin-N,N,N'-triessigsäure-triammoniumsalz und/oder Hexaammonium-triethylentetraaminhexaacetat eingesetzt werden.

11. Verfahren nach mindestens einem der vorhergehenden Ansprüche, **dadurch gekennzeichnet, dass** der (die) SCR-Katalysator(en) zur Reduktion von Stickoxiden als Aktivkomponente Vanadium, Vanadiumpentoxid, Titandioxid, Wolframoxid, kupferhaltige Zeolithe, eisenhaltige Zeolithe und/oder kobalthaltige Zeolithe enthalten.

12. Verfahren nach mindestens einem der vorhergehenden Ansprüche, **dadurch gekennzeichnet, dass** für den Fall, dass die Menge des gebildeten Ammoniaks die Menge des während der Verbrennung gebildeten NOₓ übersteigt, zur Verminderung unerwünschter Ammoniak-Emissionen stromabwärts vom SCR-Katalysator ein Katalysator zur Oxidation von Ammoniak angeordnet wird.

13. Verfahren nach Anspruch 11, **dadurch gekennzeichnet, dass** als Aktivkomponente des Katalysators zur Oxidation von Ammoniak Platin, Palladium, Iridium, auch in Form von deren Oxiden, und/oder Zeolithe herangezogen werden.

14. Verfahren nach mindestens einem der vorhergehenden Ansprüche, **dadurch gekennzeichnet, dass** eine Lösung des Kraftstoffadditivs in Dimethylacetamid, Dimethylformamid und/oder Dimethylpyridin verwendet wird.

15. Verfahren nach mindestens einem der vorhergehenden Ansprüche, **dadurch gekennzeichnet, dass** die wirksame Menge des Kraftstoffadditivs bzw. der Lösung des Kraftstoffadditivs dem Kraftstoff direkt zugegeben und/oder dem Kraftstoff durch einen separaten Tank zugeführt wird.

16. Verfahren nach mindestens einem der vorhergehenden Ansprüche, **dadurch gekennzeichnet, dass** das Verfahren so ausgelegt ist, dass der den Brennraum und/oder SCR-Katalysator verlassende Abgasstrom eine Lachgas(Distickstoffoxid)-Konzentration von weniger als 30 ppm aufweist.

17. Verfahren nach mindestens einem der vorhergehenden Ansprüche, **dadurch gekennzeichnet, dass** das Kraftstoffadditiv frei von Cyanursäure ist.

## Claims

1. A method for reducing nitrogen oxides in the exhaust gas flow of combustion engines, especially in a motor vehicle internal combustion engine, wherein an air/fuel mixture in the combustion chamber of the combustion engine is combusted in the presence of a fuel additive and, in the process, the fuel additive decomposes and the exhaust gas flow is guided through at least one catalyst arranged downstream of the combustion chamber, **characterised in that** a fuel additive is used, which decomposes in the combustion chamber releasing ammonia and the exhaust gas flow containing ammonia is guided through at least one SCR catalyst arranged downstream of the combustion chamber to reduce the concentration of the nitrogen oxides contained therein.

2. A method according to claim 1, **characterised in that** at least one organic nitrogen-containing compound is used as the fuel additive.

3. A method according to claim 2, **characterised in that** a.) a nitrogen-containing, heterocyclic compound, which has one or more rings and no sulphur or phosphorus content, and/or b) an ammonia precursor with amino and/or ammonium groups, is used as the organic nitrogen-containing compound.

4. A method according to claim 3, **characterised in that** guanidine, azirine, aziridine, diaziridine, pyrrole, imidazole, pyrazole, triazole, pyridine, pyrimidine, pyrazine, pyrazidine, triazine, purine, azepine, chinoline, isochinoline, indole, benzimidazole, phenazine, porphine, pteridine and/or isoindole is used as compound a).

5. A method according to claim 3, **characterised in that** an ammonium organyl of the form NR₄⁺X⁻ is used as compound b).

6. A method according to claim 5, **characterised in that** R⁺ is composed of hydrogen and/or at least one C₁ -C₃₀ alkyl.

7. A method according to claim 5 to 6, **characterised in that** X is composed of formiate and/or acetate and/or alkylate and/or oxalate and/or carbonate.

8. A method according to claim 5 to 7, **characterised in that** the ammonium organyl compounds are butyl-NH₄, methyl-NH₄, phenyl-NH₄, ethyl-NH₄, *t*-butyl-NH₄, phenyl-CH₂-NH₄, NH₄-C₅H₅ butyl-NR₄, methyl-NR₄, phenyl-NR₄, ethyl-NR₄, *t*-butyl-NR₄, phenyl-CH₂-NR₄ and/or NR₄-C₅H₅ (wherein R = C₁-C₃₀ alkyl-).

9. A method according to at least any one of the preceding claims, **characterised in that** the fuel additive contains organically complexed nitrogen compounds, especially amino and/or ammonium compounds in order to protect the ammonia formed in the combustion chamber from oxidation.

10. A method according to claim 8, **characterised in that** tetraammoniummethylenediaminetetraacetate, triammoniumnitriloacetate, tetraammoniumcyclohexanediamine-(1,2)-acetate, pentaammoniumdiethylenetriaminepentaacetate, tetraammoniumethyleneglycol-*bis*(aminoethylether)-N,N'-tetraacetate, N-(2-hydroxyethyl)-ethylenediamine-N,N,N'-triaceticacid-triammonium salt and/or hexaammonium-triethylenetetraaminehexaacetate are used as the organically complexed ammonium compounds.

11. A method according to at least any one of the preceding claims, **characterised in that** the SCR catalyst(s) contain as the active component to reduce nitrogen oxides, vanadium, vanadium pentoxide, titanium dioxide, tungsten oxide, copper-containing zeolites, iron-containing zeolites and/or cobalt-containing zeolites.

12. A method according to at least any one of the preceding claims, **characterised in that** if the quantity of the ammonia formed exceeds the quantity of the NOₓ formed during combustion, a catalyst for the oxidation of ammonia is arranged downstream of the SCR catalyst to reduce undesired ammonia emissions.

13. A method according to claim 11, **characterised in that** platinum, palladium, iridium, also in the form of their oxides, and/or zeolites are used as the active component of the catalyst for the oxidation of ammonia.

14. A method according to at least any one of the preceding claims, **characterised in that** a solution of the fuel additive in dimethylacetamide, dimethylformamide and/or dimethylpyridine is used.

15. A method according to at least any one of the preceding claims, **characterised in that** the effective quantity of the fuel additive or the solution of the fuel additive is added directly to the fuel and/or fed to the fuel by a separate tank.

16. A method according to at least any one of the preceding claims, **characterised in that** the method is designed such that the exhaust gas flow leaving the combustion chamber and/or SCR catalyst has a laughing gas (dinitrogen oxide) concentration of less that 30 ppm.

17. A method according to at least any one of the preceding claims, **characterised in that** the fuel additive is free of cyanuric acid.

## Revendications

1. Procédé permettant de réduire la teneur en oxydes d'azote dans un courant de gaz d'échappement de moteurs à combustion interne, en particulier du moteur à combustion interne d'un véhicule, dans lequel un mélange air/carburant est brûlé dans la chambre de combustion du moteur à combustion interne en présence d'un additif de carburant et l'additif de carburant y est décomposé et le courant de gaz d'échappement est conduit à travers au moins un catalyseur disposé en aval de la chambre de combustion, **caractérisé en ce que** l'on met en oeuvre un additif de carburant qui se décompose dans la chambre de combustion en libérant de l'ammoniac, et le courant de gaz d'échappement contenant de l'ammoniac est conduit à travers au moins un catalyseur SCR disposé en aval de la chambre à combustion pour réduire la concentration en oxydes d'azote qu'il contient.

2. Procédé selon la revendication 1, **caractérisé en ce que** l'on peut utiliser comme additif de carburant au moins un composé azoté organique.

3. Procédé selon la revendication 2, **caractérisé en ce que** l'on peut utiliser comme composé azoté organique a.) un composé azoté hétérocyclique, qui présente un ou plusieurs cycles et aucune teneur en soufre ou phosphore, et/ou b.) un précurseur d'ammoniac ayant des groupements amine et/ou ammonium.

4. Procédé selon la revendication 3, **caractérisé en ce que** l'on utilise comme composant a) la guanidine, l'azirine, l'aziridine, la diaziridine, le pyrrole, l'imidazole, le pyrazole, le triazole, la pyridine, la pyrimidine, la pyrazine, la pyrazidine, la triazine, la purine, l'azépine, la quinoléine, l'isoquinoléine, l'indole, le benzimidazole, la phénazine, la porphine, la ptéridine et/ou l'iso-indole.

5. Procédé selon la revendication 3, **caractérisé en ce que** l'on utilise comme composé b) un organyle d'ammonium de formule NR₄⁺X⁻.

6. Procédé selon la revendication 5, **caractérisé en ce que** R⁺ se compose d'hydrogène et/ou d'au moins un groupement alkyle en C₁-C₃₀.

7. Procédé selon la revendication 5 ou 6, **caractérisé en ce que** X se compose de formiate et/ou d'acétate et/ou d'alkylate et/ou d'oxalate et/ou de carbonate.

8. Procédé selon la revendication 5 ou 7, **caractérisé en ce que** les composés d'organyle d'ammonium sont le butyl-NH₄, le méthyl-NH₄, le phényl-NH₄, l'éthyl-NH₄, le tertio-butyl-NH₄, le phényl-CH₂-NH₄, le NH₄-C₅H₅ butyl-NR₄, le méthyl-NR₄, le phényl-NR₄, l'éthyl-N_{R}4, le tertio-butyl-NR₄, le phényl-CH₂-NR₄ et/ou le NR₄-C₅H₅ (avec R = alkyle en C₁-C₃₀).

9. Procédé selon au moins l'une des revendications précédentes, **caractérisé en ce que** l'additif de carburant comprend des composés d'azote organiques complexés, en particulier des composés d'amine et/ou d'ammonium pour protéger de l'oxydation l'ammoniac formé dans la chambre de combustion.

10. Procédé selon la revendication 8, **caractérisé en ce que** l'on met en oeuvre à titre de composés d'ammonium organiques complexés l'éthylènediamine tétraacétate de tétraammonium, l'acide nitriloacétique de triammonium, le diamino-(1,2) cyclohexane-acétate de tétraammonium, le diéthylènetriamine-pentaacétate de pentaammonium, le N,N'-tétraacétate d'éthylène glycol-bis(aminoéthyléther) de tétraammonium, le sel de triammonium d'acide N-(2-hydroxyéthyl)éthylènediamine N,N,N'-triacétique et/ou le triéthylènetétraamine-hexaacétate d'hexaammonium.

11. Procédé selon au moins l'une des revendications précédentes, **caractérisé en ce que** le ou les catalyseurs SCR pour la réduction des oxydes d'azote contiennent du vanadium, du pentoxyde de vanadium, de l'oxyde de titane, de l'oxyde de tungstène, des zéolithes cupriques, des zéolithes ferriques et/ou des zéolithes cobaltiques sous forme de composants actifs.

12. Procédé selon au moins l'une des revendications précédentes, **caractérisé en ce que**, au cas où la quantité d'ammoniac formé dépasserait la quantité de NOₓ formée au cours de la combustion, un catalyseur pour l'oxydation de l'ammoniac serait disposé en aval du catalyseur SCR afin de réduire les émissions indésirables d'ammoniac.

13. Procédé selon la revendication 11, **caractérisé en ce que** l'on peut utiliser le platine, le palladium, l'iridium, également sous forme de leurs oxydes et/ou zéolithes, comme composant actif du catalyseur pour l'oxydation de l'ammoniac

14. Procédé selon au moins l'une des revendications précédentes, **caractérisé en ce que** l'on utilise une solution de l'additif de carburant dans du diméthyl-acétamide, du diméthylformamide et/ou de la diméthyl-pyridine.

15. Procédé selon au moins l'une des revendications précédentes, **caractérisé en ce que** la quantité efficace de l'additif de carburant ou de la solution de l'additif de carburant est ajoutée directement au carburant et/ou est amenée au carburant en passant par un réservoir séparé.

16. Procédé selon au moins l'une des revendications précédentes, **caractérisé en ce que** le procédé est ainsi conçu que le gaz d'échappement quittant la chambre de combustion et/ou le catalyseur SCR présente une concentration en gaz hilarant (dioxyde d'azote) inférieure à 30 ppm.

17. Procédé selon au moins l'une des revendications précédentes, **caractérisé en ce que** l'additif de carburant est exempt d'acide cyanurique.
